# EUROPÄISCHE PATENTSCHRIFT

(11) **EP 3 154 733 B1**
(45) Veröffentlichungstag und Bekanntmachung des Hinweises auf die Patenterteilung: **13.10.2021**
(21) Anmeldenummer: 15712314.2
(22) Anmeldetag: 18.03.2015
(51) Int. Cl.: B23F 5/16, B23F 19/00

(54) **VERFAHREN ZUM EINARBEITEN VON HINTERLEGUNGEN IN ZAHNFLANKEN DER ZÄHNE VON ZAHNRÄDERN UND WERKZEUGMASCHINE ZUR DURCHFÜHRUNG EINES DERARTIGEN VERFAHRENS**
METHOD FOR INCORPORATING UNDERCUTS IN TOOTH FLANKS OF TEETH OF TOOTHED WHEELS AND MACHINE-TOOL FOR CARRYING OUT SUCH A METHOD
PROCÉDÉ DE FORMATION DE CONTRE-DÉPOUILLES DANS LES FLANCS DE DENTS DE ROUES DENTÉES ET MACHINE-OUTIL POUR SA MISE EN OEUVRE

(30) Priorität: 16.06.2014 DE 102014108438
(43) Veröffentlichungstag der Anmeldung: 19.04.2017
(73) Patentinhaber: Profilator GmbH & Co. KG, 42329 Wuppertal (DE)
(72) Erfinder: SOBCZYK, Marcel, 42653 Solingen (DE)
(74) Vertreter: Grundmann, Dirk
(86) Internationale Anmeldenummer: PCT/EP2015/055661
(87) Internationale Veröffentlichungsnummer: WO 2015/192979

(56) Entgegenhaltungen:
- WO-A1-2007/045610
- DE-A1- 3 915 976
- DE-C1- 4 122 460
- DE-C1- 4 200 418

## Beschreibung

Die Erfindung betrifft ein Verfahren zum Einarbeiten von Hinterlegungen in linke und rechte Zahnflanken der Zähne eines verzahnten Werkrades durch Wälzschälen, bei dem das Werkrad und ein in einem Achskreuzwinkel zum Werkrad angeordnetes Schneidzähne mit rechten und linken Schneidkanten aufweisendes Schneidrad in einem festen Drehzahlverhältnis kontinuierlich drehangetrieben werden, die Schneidzähne spanabtragend in die Zahnflanken eingreifen und der Vorschub zumindest eine Bewegungskomponente in Erstreckungsrichtung der Zähne des Werkrades besitzt und eine Werkzeugmaschine zur Durchführung des Verfahrens.

Ein derartiges Verfahren gemäß dem Oberbegriff des Anspruchs 1 offenbart die DE 41 22 460 C1, die ebenfalls eine Werkzeugmaschine zur Durchführung dieses Verfahrens offenbart. Die beiden Zahnkanten des verzahnten Schneidrades greifen in die Zahnlücken der mit Hinterlegungen zu versehenden Zähne des Werkrades ein, wobei der Vorschub eine Bewegungskomponente in Achsrichtung des Werkrades und in Radialrichtung des Werkrades hat. Beide Zahnflanken werden gleichzeitig mit Hinterlegungen versehen. Das Verfahren eignet sich nur für geradverzahnte Werkstücke.

Die DE 42 00 418 C1 beschreibt ein Verfahren zum Erzeugen von Hinterlegungen mit lediglich einem radialen Vorschub.

Die DE 39 15 976 C2 beschreibt ein Verfahren zur Schlichtbearbeitung der Flanken von gerad- oder schrägverzahnten, innen oder außen verzahnten Zahnrädern durch Wälzschälen, bei dem der Achsabstand und die Phasenlage der Drehbewegung des Werkzeuges zur Drehbewegung des Werkstücks kontinuierlich geändert werden und bei dem die Rechts- beziehungsweise Linksflanken in getrennten Arbeitsgängen erzeugt werden.

Mit dem eingangs genannten Verfahren und den dort verwendeten Werkzeugen können nur geradverzahnte Verzahnungen mit Hinterlegungen versehen werden. Derartige Verzahnungen findet man beispielsweise an den Schiebemuffen in Pkw-Schaltgetrieben. Bei Lkws werden häufig schräg verzahnte Zahnräder verwendet. Mit dem eingangs genannten Verfahren ist die Einbringen von Hinterlegungen in schräg verzahnte Werkräder nicht möglich.

Der Erfindung liegt daher die Aufgabe zugrunde, das Anwendungsspektrum des Verfahrens zu vergrößern.

Gelöst wird die Aufgabe durch die in den Ansprüchen angegebene Erfindung, nämlich ein Verfahren gemäß Anspruch 1 sowie eine Werkzeugmaschine gemäß Anspruch 11. Zunächst und im Wesentlichen wird vorgeschlagen, dass beim Einbringen der Hinterlegungen die Schneidzähne nicht mit beiden Schneidkanten gleichzeitig in die einander gegenüberliegenden Zahnflanken einer Zahnlücke eingreifen. Vielmehr ist vorgesehen, dass die Einbringung der Hinterlegungen in zwei aufeinander folgenden Bearbeitungsschritten erfolgt, wobei jeweils eine bevorzugt schräg zur Zahnflanke verlaufende Hinterlegungsflanke erzeugt wird, die sich zahneinwärts erstreckt. An die Hinterlegungsflanke schließt sich eine Austrittsflanke an, die eine axiale Länge besitzt, die erheblich kürzer ist, als die axiale Länge der Hinterlegungsflanke. In einem ersten Bearbeitungsschritt werden bei einem Vorschub, der eine Bewegungskomponente in Achsrichtung und eine differenziale Vorschubkomponente besitzt, jeweils mit einer der beiden Schneidkanten die eine der beiden Zahnflanken der Zähne bearbeitet. Der differenziale Vorschub wird durch eine Veränderung der Phasenlage der in einem festen Drehzahlverhältnis zueinander drehenden Achsen des Werkstücks und des Werkzeuges erzeugt. Werkstück und Werkzeug machen dabei eine Relativdrehung in einer Drehrichtung. Durch eine kontinuierliche Vergrößerung der Phasenverschiebung erhöht sich einhergehend mit der Axialverlagerung der Schneidkante die Eintrittstiefe der Schneidkante in die jeweiligen Zahnflanken. Die andere Schneidkante läuft dabei frei durch die Zahnlücke. In einem zweiten Bearbeitungsschritt ist der axialen Vorschubkomponente eine differenziale Vorschubkomponente in Gegendrehrichtung überlagert. Auch hier ändert sich die Phasenlage zwischen der Drehbewegung der Werkstückachse und der Drehbewegung der Werkzeugachse kontinuierlich mit dem axialen Vorschub, so dass die andere Schneidkante einhergehend mit der Axialverlagerung des Werkzeuges zunehmend tiefer in die jeweiligen anderen Zahnflanken eintaucht. Die eine Zahnflanke läuft beim zweiten Bearbeitungsschritt frei durch die Zahnlücke. Ein vergleichbares Ergebnis lässt sich dadurch erzielen, dass der axialen Vorschubkomponente, also der Vorschubkomponente in Erstreckungsrichtung der Zahnflanke, eine tangentiale Vorschubkomponente bezogen auf den Zahneingriffspunkt in Linksdrehrichtung oder in Rechtsdrehrichtung überlagert ist. Die Werkstückdrehachse und der Zahneingriffspunkt, in dem der Schneidzahn des Schneidrades spanabhebend in die Zahnflanke des Werkrades eingreift, spannt eine Ebene auf. Diese Ebene wird von der Werkzeugachse in einem Achskreuzwinkel gekreuzt. Der Punkt, durch den die Werkzeugachse durch diese Ebene geht, liegt in einer in der Ebene liegenden Geraden, die quer zur Werkstückachse verläuft und durch den Zahneingriffspunkt geht. Bei der Variation des Vorschubs in Tangentialrichtung wandert der Schnittpunkt der Werkzeugachse senkrecht in der Drehebene des Werkrades zu einer Radialrichtung. Zur Korrektur von Verzerrungen in den Hinterlegungsflanken kann während des Vorschubs in Zahnflanken-Erstreckungsrichtung auch der Achskreuzwinkel oder der Radialabstand des Kreuzungspunktes der Werkzeugspindelachse in der Drehebene des Werkrades variiert werden. Die spanende Bearbeitung zur Erzeugung der Hinterlegungen kann beispielsweise mit der Bearbeitung der linken oder der rechten Zahnflanken beginnen. Es kommen dann jeweils zunächst nur die linken oder rechten Schneidkanten zum Einsatz. Wird beispielsweise mit der Bearbeitung der linken Zahnflanke begonnen, so befinden sich in dieser ersten Bearbeitungsphase nur die linken Schneidkanten des Schneidrades in spanabhebendem Eingriff in der linken Zahnflanke, während die rechten Schneidkanten frei durch die Lücke hindurchtauchen. Der differenzielle Vorschub erfolgt hier durch eine Relativdrehung in Linksrichtung. Bevorzugt erfolgt die Bearbeitung der rechten Zahnflanke erst nach Fertigstellung der Hinterlegung der linken Zahnflanke. In dieser Bearbeitungsphase greift die rechte Schneidkante spanabhebend in die rechte Zahnflanke des Zahnes des Werkrades ein. Der Relativvorschub erfolgt durch eine Relativdrehung in Links-Drehrichtung.

Mit dem Verfahren lassen sich nicht nur geradverzahnte Zahnräder, und nicht nur innen verzahnte, sondern auch außen verzahnte und schräg verzahnte Zahnräder mit Hinterlegungen versehen. Es ist also insbesondere möglich, durch eine individuelle differenziale Vorschubkomponente in Linksdrehrichtung beziehungsweise Rechtsdrehrichtung Hinterlegungen in die Zahnflanken der Zähne von schräg verzahnten Werkstücken einzuarbeiten. Bei geradverzahnten Werkrädern sind die beiden differenzialen Vorschubkomponenten symmetrisch. Bei schräg verzahnten Zahnrädern weichen die beiden differenzialen Vorschubkomponenten voneinander ab, so dass unsymmetrische Hinterlegungen erzeugt werden können. Der Übergangsbereich zwischen der Hinterlegungsflanke und dem nicht hinterlegten Abschnitt einer Zahnflanke wird von einer schrägen Austrittsflanke gebildet. Die axiale Länge der Hinterlegungsflanke, die in einem Hinterlegungswinkel zur Zahnflanke schräg zahneinwärts verläuft, ist größer, bevorzugt mehr als doppelt so groß, als die Austrittsflanke, die in einem Austrittswinkel schräg zur Zahnflanke verläuft. Die Hinterlegungswinkel liegen in einem Bereich zwischen 2,5° bis 17°, bevorzugt zwischen 4° und 15°. Der Austrittswinkel ist vorzugsweise größer als 15°. Bei der Bearbeitung der Hinterlegungen schneidet die Schneidkante mit zunehmendem Vorschub in Axialrichtung beziehungsweise Zahnerstreckungsrichtung tiefer in die Zahnflanke ein, bis eine maximale Einschnitttiefe erreicht wird. Bei Erreichen der maximalen Einschnitttiefe wird der axiale Vorschub gestoppt. Das Werkzeug wird dann aus der Verzahnung beziehungsweise der Hinterlegung herausbewegt. Dies kann in Radialrichtung erfolgen. Es ist aber auch möglich, hierzu den Verdrehwinkel zwischen Werkzeugspindel und Werkstückspindel zu verändern oder das Werkzeug durch eine Kombination dieser Bewegungen aus der Hinterlegung heraus zu verlagern. Es verbleibt dann ein im Wesentlichen vom Achskreuzwinkel abhängige Austrittsflanke. Zufolge dieser Ausgestaltung steht bei einem erfindungsgemäß hinterlegten Zahnrad, welches in einem Getriebe eingebaut ist, nur ein minimaler axialer Bereich der Zahnflanke nicht als Tragfläche zum Angriff einer Gegenzahnflanke eines Gegenzahnrades zur Verfügung. An den Hinterlegungsflanken können erste Zahnflanken eines ersten Gegenzahnrades und an den nicht hinterlegten Abschnitten der Zahnflanken die Zahnflanken eines zweiten Gegenzahnrades angreifen. Bevorzugt wird ein Schneidrad mit relativ geringem Durchmesser im Vergleich zum Durchmesser des Werkrades verwendet. Das Verhältnis der Zähne des Schneidrades zu den Zähnen des Werkrades liegt bevorzugt in einem Bereich kleiner ein Halb, kleiner ein Drittel, kleiner ein Viertel oder bei etwa ein Fünftel. Bei einem Ausführungsbeispiel besitzt das Werkrad 77 Zähne und das Schneidrad 16 Zähne. Das Schneidrad kann ein nachschärfbares oder ein nicht nachschärfbares Werkzeug sein. Die Schneidkanten können in einer gemeinsamen Fläche, beispielsweise einer Planfläche oder einer Konusfläche liegen. Das Schneidrad hat dann einen Tellerschliff. Es ist aber auch vorgesehen, dass das Schneidrad einen Treppenschliff besitzt. Der Kopffreiwinkel der Schneidkante liegt bevorzugt in einem Bereich von 6° bis 15°. Der Flankenfreiwinkel der Schneidkante des Schneidrades ist mindestens so groß wie der Hinterlegungswinkel, bevorzugt jeweils 2° größer als der Hinterlegungswinkel. Er kann beispielsweise im Bereich von 6 bis 17° liegen. Ein derartiges, bevorzugtes Schneidrad ist bevorzugt nicht nachschärfbar, hat aber den Vorteil, Austrittsflanken mit einer geringen axialen Erstreckung fertigen zu können. Es sind weitere Verfahrensvarianten möglich. Während der spanenden Bearbeitung mit dem Axialvorschub und dem Differenzialvorschub sind zusätzliche Vorschubkomponenten möglich. Mit einem radialen Vorschub kann ein konischer Fußkreis erzeugt werden. Es ist ferner möglich, gleichzeitig den Achskreuzwinkel oder die Lage des Achskreuzpunktes von Werkzeugspindelachse und Werkstückspindelachse zu verlagern. Es ist insbesondere vorgesehen, jeden dieser Freiheitsgrade einzeln oder in Kombination zur Variation des Vorschubs zu verwenden.

Die Erfindung betrifft darüber hinaus eine Werkzeugmaschine mit einer Werkzeugspindel zur Aufnahme eines Werkzeugs und einer Werkstückspindel zur Aufnahme eines Werkstücks, wobei Werkzeugspindel und Werkstückspindel durch miteinander synchronisierte Einzelantriebe angetrieben werden können. Es sind ferner elektrische Antriebe vorgesehen, mit denen der axiale Vorschub realisierbar ist. Die Einzelantriebe werden von der Steuereinrichtung mittels eines Steuerprogramms angetrieben. Das Steuerprogramm ist so eingerichtet, dass die Werkzeugmaschine das oben beschriebene Verfahren durchführt.

Ein Ausführungsbeispiel der Erfindung wird nachfolgend anhand beigefügter Zeichnungen erläutert. Es zeigen:

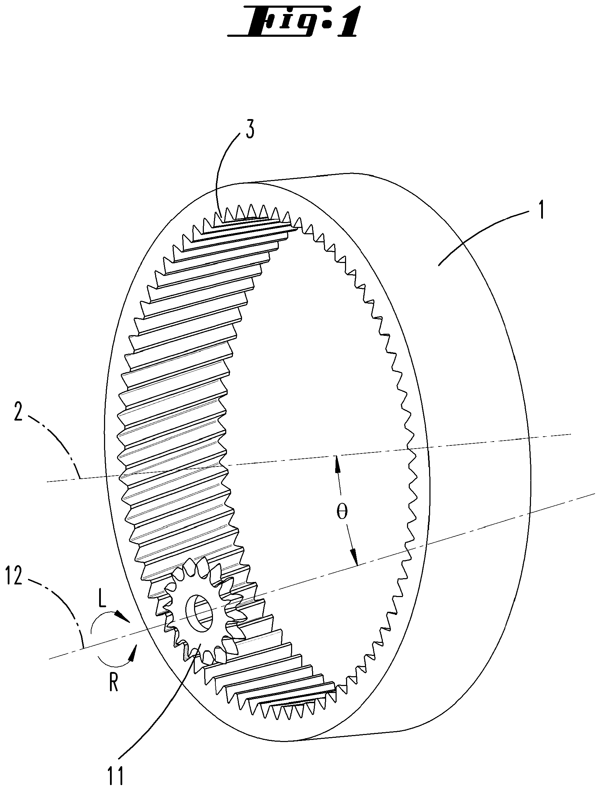

- Fig. 1: zur Verdeutlichung der räumlichen Lage von Werkrad 1 und Schneidrad 11 ein von einem Futter 20 einer in Figur 7 schematisch dargestellten Werkzeugmaschine gehaltenes Werkrad 1 und ein auf einer Werkzeugspindel 18 sitzendes Schneidrad 11 in einer perspektivischen Darstellung,
- Fig. 2: eine Draufsicht auf die Stirnseite des Werkrades 1 im Bereich des Zahneingriffs eines Schneidzahnes 13 des Schneidrades 11 in eine Zahnlücke zwischen Zahnflanken 4, 5 des Werkrades 1,
- Fig. 3: vergrößert eine Draufsicht auf mit dem Verfahren erzeugte Hinterlegungen 6 in Zahnflanken 4, 5 der Zähne 3 eines Werkrades 1,
- Fig. 4: den Schnitt durch einen Zahn 3 im Bereich der Hinterlegung 6 zur Verdeutlichung des Flankenverlaufs der Hinterlegungsflanke 7 und der Austrittsflanke 9,
- Fig. 5: einen Schnitt gemäß der Linie V-V in Figur 2 zur Verdeutlichung des Kopffreiwinkels y, der im Bereich von 6° bis 15° liegt,
- Fig. 6: den Schnitt gemäß der Linie VI-VI in Figur 2 zur Verdeutlichung des Flankenfreiwinkels ε, der im Bereich zwischen 6 und 17° liegen kann und
- Fig. 7: schematisch den Aufbau einer Werkzeugmaschine.

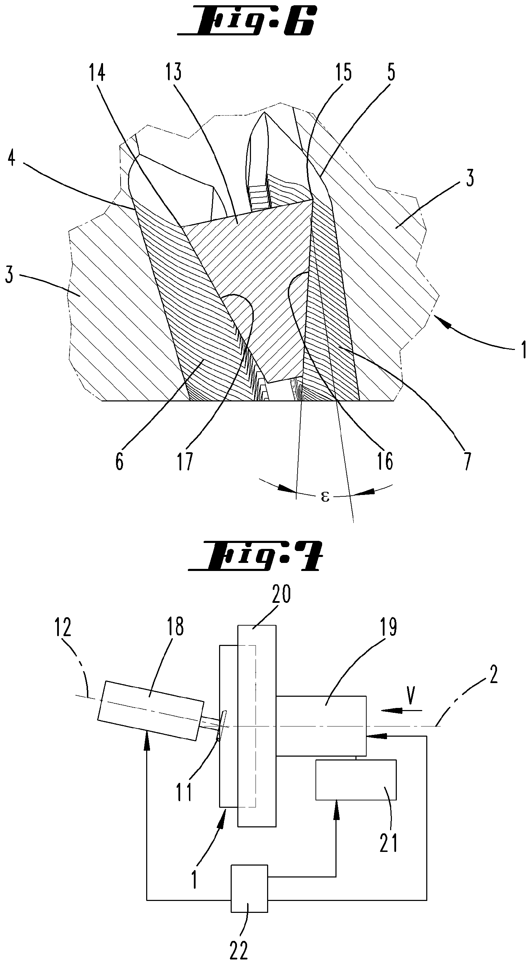

Die Werkzeugmaschine, die in der Figur 7 schematisch dargestellt ist, besitzt ein nicht dargestelltes Maschinenbett mit von einer Steuereinrichtung 22 ansteuerbaren Positionierantrieben zur Positionierung der Lage einer Werkzeugspindel 18 gegenüber einer Werkstückspindel 19. Dargestellt ist in der Figur 7 die Werkzeugspindel 18, bei der es sich um einen elektrischen Einzelantrieb handelt, der von der Steuereinrichtung 22 angesteuert wird. Die Werkzeugspindel treibt ein Schneidrad 11 an, das sich um die Werkzeugspindelachse 12 dreht. Die Werkstückspindel 19 wird von einem elektrischen Einzelantrieb um eine Drehachse 2 drehangetrieben, und besitzt ein Futter 20, in welchem ein verzahntes, mit Hinterlegungen zu versehenes Werkrad 1 eingespannt ist. Es ist eine Vorschubeinrichtung 21 vorgesehen, mit der ein Vorschub V in Achsrichtung der Werkstückspindelachse 2 realisierbar ist. Der Vorschub V besitzt eine Bewegungskomponente in Achsrichtung 2 des Werkrades 1. Mit der Steuereinrichtung 22 werden Werkrad 1 und Schneidrad 11 in einem vorgegebenen Drehzahlverhältnis synchronisiert zueinander angetrieben, welches dem Zahnverhältnis von Werkrad 1 und Schneidrad 11 entspricht. Zusätzlich ist die Steuereinrichtung 22 in der Lage, nach einem Steuerprogramm die Phasenlage der Drehung von Werkstückspindel 19 und Werkzeugspindel 18 zu verändern, um einen differenziellen Vorschub zu verwirklichen. Der differenzielle Vorschub kann sowohl in Linksdrehrichtung L als auch in Rechtsdrehrichtung R erfolgen. Zur Bearbeitung von schräg verzahnten Werkstücken hängt die Phasenlage zudem von der Eindringtiefe des Schneidrades 11 im Werkrad 1 ab.

Die Steuereinrichtung 22 besitzt ein Steuerprogramm, das derart programmiert ist, dass das nachfolgend beschriebene Verfahren, bei dem es sich um ein Ausführungsbeispiel der Erfindung handelt, auf der Werkzeugmaschine durchgeführt werden kann.

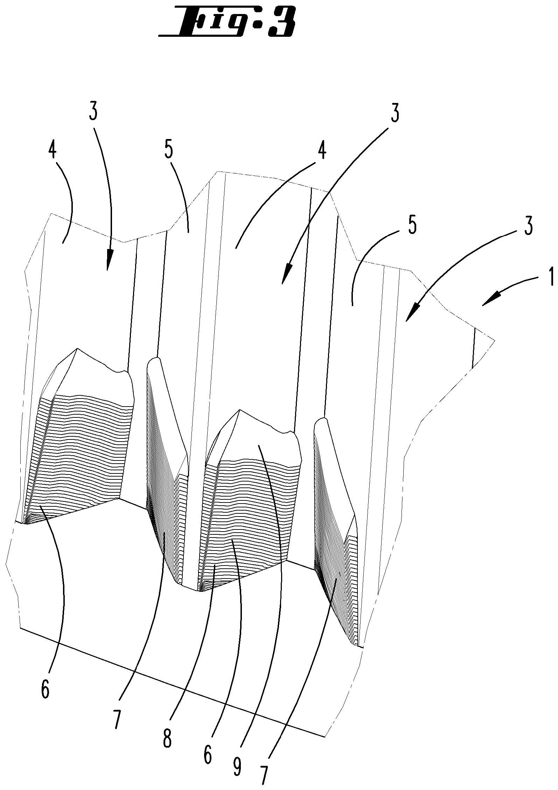

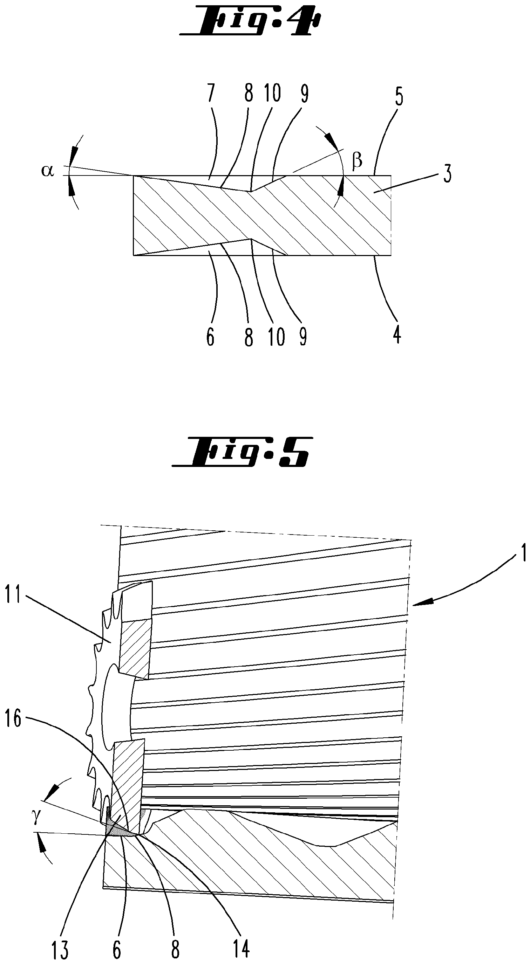

Mit dem Verfahren sollen die in den Figuren 3 und 4 dargestellten Hinterlegungen erzeugt werden. Es handelt sich dabei um Ausnehmungen in den Zahnflanken 4, 5 der Zähne 3 eines vorverzahnten, innenverzahnten Werkrades 1. Die Zähne 3 des Werkrades 1 besitzen Zahnflanken 4, 5. Zu einer zwischen zwei Zähnen 3 angeordneten Zahnlücke weisen somit linke Zahnflanken 4 und rechte Zahnflanken 5. In die linken Zahnflanken 4 sollen linke Hinterlegungen 6 und in die rechten Zahnflanken 5 rechte Hinterlegungen 7 eingearbeitet werden. Die geometrische Form der Hinterlegungen ist in den Figuren 3 und 4 dargestellt. Sowohl die linken Hinterlegungen 6 als auch die rechten Hinterlegungen 7 besitzen jeweils in einem Hinterlegungswinkel a, der in einem Bereich zwischen 2,5° bis 17° liegt, bevorzugt in einem Bereich zwischen 6° bis 17°, zur linken Zahnflanke 4 beziehungsweise rechten Zahnflanke 5 verlaufende Hinterlegungsflanken 8. Die Hinterlegungsflanken 8 besitzen ihre größte Eindringtiefe in die linke Zahnflanke 4 oder rechte Zahnflanke 5 im Bereich eines Übergangs 10. Zahneinwärts schließt sich an den Übergang 10 eine Austrittsflanke 9 an, die maximal halb so lang ist, wie die Hinterlegungsflanke 8. Die Austrittsflanke 9 hat einen Austrittsflankenwinkel von mehr als 15° zur Zahnflanke 4, 5. Die in den Figuren 3 und 6 erkennbar quer zur Erstreckungsrichtung der Hinterlegungen 6 verlaufenden Linien symbolisieren die einzelnen aufeinanderfolgenden Schnitte von linken und rechten Schneidkanten 14, 15 der Schneidzähne 13 eines Schneidrades 11.

Das Schneidrad 11 besitzt eine plane Stirnfläche. Die Stirnfläche kann aber auch konisch oder treppenförmig verlaufen. Die Stirnfläche grenzt in jeweils einen Schneidzahn 13 an eine linke Schneidkante 14 beziehungsweise an eine rechte Schneidkante 15. An die Schneidkanten 14,15 schließen sich linke Flanken 16 beziehungsweise rechte Flanken 17 an. Der Flankenwinkel ε der Flanke 16 beziehungsweise 17, der beim Schnitt einem Flankenfreiwinkel entspricht, liegt im Bereich zwischen 6 und 17° und sollte mindestens 2° größer sein, als der Hinterlegungswinkel α. Der Kopfwinkel γ im Bereich der Schnittlinie der Schneidkanten 16, 17 beträgt 6 bis 15°.

Beim Ausführungsbeispiel dient die Innenverzahnung als Hohlrad zur Aufnahme eines Planetengetriebes. Die Planetenräder rollen sich wälzend auf der schrägen Innenverzahnung ab. Die Innenverzahnung ist im Ausführungsbeispiel eine Schrägverzahnung. Die Verzahnung kann aber auch gerade sein. Es handelt sich um eine Laufverzahnung mit einer größeren Zahnhöhe und einem kleineren Eingriffswinkel als eine normale Kupplungsverzahnung. Die Zahnhöhe entspricht etwa zwei Mal dem Modul. Die Hinterlegungen wirken mit Zahnflanken eines außenverzahnten Gegenrades zusammen, welches sich koaxial zum innenverzahnten Zahnrad dreht. Die beiden Verzahnungen werden durch Axialverlagerung in und außer Eingriff gebracht.

Zur Erzeugung eines konischen Fußkreises ist ein Vorschub in Radialrichtung möglich. Es ist ferner vorgesehen, während des Fertigens der Hinterlegungen 6 den Achskreuzwinkel θ zu ändern und/oder die Lage des Kreuzungspunktes von Werkzeugspindelachse 12 und Werkstückspindelachse 2 zu verändern. Es ist insbesondere vorgesehen, durch eine Kombination der Variation einzelner oder aller Fertigungsparameter während des Erzeugens der Hinterlegungen 6 die Zahnflanken 4, 5 zu beeinflussen.

Das Verfahren zum Erzeugen der Hinterlegungen erfolgt in folgenden Schritten:
Zunächst werden in einer schälenden Bewegung jeweils nur eine Zahnflanke der Zähne 3 des Werkrades 1 mit Hinterlegungen versehen. Beim Ausführungsbeispiel ist dies die rechte Flanke 5. Hierzu wird die Werkzeugspindelachse 12 in einem Achskreuzwinkel θ zur Werkstückspindelachse 2 gebracht.

Das Schneidrad 11 wird in eine Position gebracht, in der die rechte Schneidkante 15 an der rechten Zahnflanke 5 eines Zahnes 3 anliegt. Die Werkzeugspindel 18 und die Werkstückspindel 19 werden dann in eine synchronisierte Drehung gebracht. Es erfolgt ein kontinuierlicher Vorschub in Form einer Relativverlagerung des Schneidrades 11 gegenüber dem Werkrad 1, die eine Bewegungskomponente in Erstreckungsrichtung der Zähne 3 besitzt. Bei einem schräg verzahnten Werkrad, wie es im Ausführungsbeispiel gezeigt ist, besitzt der Vorschub somit eine Komponente in Achsrichtung der Werkstückspindelachse 2 und eine Komponente in Drehrichtung, d.h. es ändert sich kontinuierlich die Phasenlage zwischen Werkstückspindeldrehung und Werkzeugspindeldrehung.

Diesem Vorschub, der alleine nur eine Verlagerung der Schneidkanten 14, 15 entlang der Zahnflanken 4, 5 zur Folge hätte, ist ein differenzieller Vorschub in Rechtsdrehrichtung R überlagert. Dieser differenzielle Vorschub in Rechtsrichtung bewirkt, dass die rechte Schneidkante 15 in die rechte Zahnflanke 5 eintritt, um die Hinterlegungsflanke 8 aus dem Material des Zahnes 3 herauszuschälen. Nach Erreichen des Übergangs 10 wird der Axialvorschub gestoppt und das Werkzeug radial aus der Verzahnung herausbewegt. Aufgrund des Achskreuzwinkels θ verbleibt eine Austrittsflanke 9. Bei einem geradverzahnten Rohling erfolgt der Grundvorschub in Achsrichtung des Werkrades 2. Diesem Grundvorschub ist der differenzielle Vorschub überlagert.

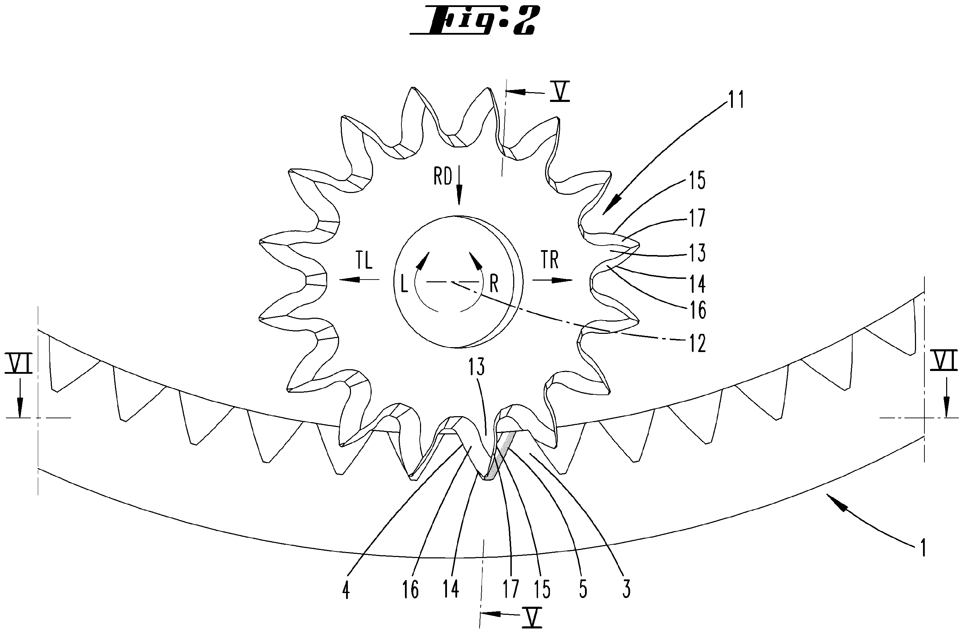

Die Figur 2 zeigt die Situation nach Bearbeitung der rechten Zahnflanke 5.

Zur Bearbeitung der linken Zahnflanke 4 wird das Schneidrad 11 in die in Figur 2 dargestellte Position gegenüber dem Werkrad 1 gebracht, in der die linke Schneidkante 14 an der linken Zahnflanke 4 anliegt. Einhergehend mit dem oben beschriebenen Grundvorschub in Richtung der Erstreckungsrichtung der Zähne 3 erfolgt jetzt die Einarbeitung der linken Hinterlegungen 6 in die linken Zahnflanken 4, wobei dem Grundvorschub ein differenzieller Vorschub in Linksdrehrichtung L des Schneidrades 11 überlagert wird, so dass eine Hinterlegungsflanke 8 in die linken Zahnflanke eingearbeitet wird, bis der Übergang 10 erreicht ist. Es verbleibt eine Austrittsflanke 9.

Die Figur 2 zeigt zusätzlich zu den die Linksdrehrichtung L und die Rechtsdrehrichtung R andeutenden Pfeilen weitere Pfeile, die die Radialrichtung RD, eine Tangentialrichtung in Linksdrehrichtung TL und eine Tangentialrichtung in Rechtsdrehrichtung TR andeuten. In einer Variation des Verfahrens, bei dem nacheinander zunächst die rechten Zahnflanken 5 und anschließend die linken Zahnflanken 4 mit Hinterlegungen versehen werden, wird dem Vorschub in Axialrichtung, also allgemein dem Vorschub in Zahnflanken-Erstreckungsrichtung jeweils ein tangentialer Vorschub bezogen auf den Zahneingriffspunkt des Schneidrades 11 in das Werkrad 1 überlagert. Der tangentiale Vorschub TL beziehungsweise TR wird durch eine lineare Verlagerung der Werkzeugspindel gegenüber der Werkstückspindel in der Drehebene des Werkrades 1 verwirklicht. Bezogen auf die Figur 2, bei der die Drehebene des Werkrades 1 in der Papierebene liegt, wird die Werkstückspindelachse 12 entweder nach links oder nach rechts kontinuierlich verschoben, um die linke Zahnflanke 4 beziehungsweise die rechte Zahnflanke 5 mit einer Hinterlegung zu versehen. Dieser Vorschubbewegung kann eine Vorschubrichtung in Radialrichtung RD, also quer zur tangentialen Verlagerungsrichtung TL, TR überlagert sein. Es ist auch möglich, während dieser tangentialen Vorschubbewegung den Achskreuzwinkel θ zu verändern.

Schließlich ist es möglich, die Hinterlegungen entweder nur durch einen differenziellen Vorschub L, R oder nur durch einen tangentialen Vorschub TL, TR zu erzeugen. Es ist aber auch möglich, den Vorschub durch eine kombinierte differenziale und tangentiale Bewegung zu verwirklichen.

Die Werkzeugspindelachse 12 durchdringt die Drehebene des Werkrades 1, die durch den Schäleingriffspunkt der Schneidkante 14, 15 verläuft, in einer Radiallinie des Schäleingriffspunktes, bezogen auf die Drehachse des Werkrades 1.

Ein derartiges Verfahren kann durch die folgenden Merkmalskombinationen weitergebildet werden, nämlich:
Ein Verfahren, das dadurch gekennzeichnet ist, dass in zwei aufeinander folgenden Bearbeitungsschritten jeweils durch eine differenziale und/oder tangentiale Vorschubkomponente in Linksdrehrichtung L, TL mit den linken Schneidkanten 14 der Schneidzähne 13 die linken Zahnflanken 4 und durch eine differenziale und/oder tangentiale Vorschubkomponente in Rechtsdrehrichtung R, TR mit den rechten Schneidkanten 15 der Schneidzähne 13 die rechten Zahnflanken 5 bearbeitet werden.

Ein Verfahren, das dadurch gekennzeichnet ist, dass der Vorschubbewegung in Erstreckungsrichtung der Zähne entweder lediglich eine differenziale Vorschubkomponente in Linksdrehrichtung L oder in Rechtsdrehrichtung R oder nur eine linke tangentiale Vorschubkomponente TL oder rechte tangentiale Vorschubkomponente TR überlagert ist.

Ein Verfahren, das dadurch gekennzeichnet ist, dass zur Korrektur von Verzerrungen im Flächenverlauf der Hinterlegungsflanken 7, 8 während des Vorschubs in Zahnflankenrichtung auch der Radialabstand des Kreuzungspunktes der Werkstückspindelachse 2 und der Werkzeugspindelachse 12 zur Werkstückspindelachse 2 und/oder der Achskreuzwinkel θ geändert wird.

Ein Verfahren, das dadurch gekennzeichnet ist, dass der Achskreuzwinkel θ im Bereich zwischen 8° und 25°, bevorzugt im Bereich zwischen 10° und 15° liegt. Ein Verfahren, das dadurch gekennzeichnet ist, dass das Verhältnis der Schneidzähne 13 des Schneidrades 11 zu den Zähnen 3 des Werkrades 1 geringer ist als ein Halb, geringer ist als ein Drittel, geringer ist als ein Viertel oder etwa ein Fünftel beträgt.

Ein Verfahren, das dadurch gekennzeichnet ist, dass die Hinterlegungen 6, 7 in einem Hinterlegungswinkel α von 2,5° bis 17°, insbesondere von 4° bis 15° zur Zahnflanke 4, 5 zahneinwärts verlaufende Hinterlegungsflanken 8 aufweisen.

Ein Verfahren, das dadurch gekennzeichnet ist, dass der Flankenfreiwinkel ε der Schneidkanten 14, 15 mindestens 2° größer ist, als der Hinterlegungswinkel α und bevorzugt in einem Bereich zwischen 6 und 17° liegt.

Ein Verfahren, das dadurch gekennzeichnet ist, dass die Hinterlegungen 6 in einem Austrittswinkel β >15° zur Zahnflanke 4, 5 verlaufende Austrittsflanken 9 aufweisen.

Ein Verfahren, das dadurch gekennzeichnet ist, dass die Zähne 3 des Werkrades 1 schräg zur Achse 2 des Werkrades verlaufen.

Ein Verfahren, das dadurch gekennzeichnet ist, dass das Schneidrad 11 nach Erreichen einer maximalen Eindringtiefe in die Zahnflanke 4, 5 ohne Axialvorschub insbesondere in Radialrichtung aus der Verzahnung herausbewegt wird, so dass sich eine an einem Übergang 10 anschließende Austrittsflanke 9 ausbildet.

Die Erfindung betrifft ferner eine Werkzeugmaschine zur Durchführung eines Verfahrens zum Einarbeiten von Hinterlegungen in linke und rechte Zahnflanken der Zähne eines verzahnten Werkrades durch Wälzschälen, die gekennzeichnet ist durch eine Werkzeugspindel 18, die ein linke und rechte Schneidzähne 14,15 aufweisendes Schneidrad 11 trägt, mit einer Werkstückspindel 19, die ein verzahntes, mit Hinterlegungen zu versehenes Werkrad 1 trägt und mit einer Vorschubeinrichtung 21 mindestens zur Relativverlagerung des Schneidrades 11 gegenüber dem Werkrad 1 in Achsrichtung 2 der Werkstückspindel 19, wobei die Werkzeugspindel 19, die Werkstückspindel 18 und die Vorschubeinrichtung 21 elektrische Einzelantriebe aufweisen, die nach einem Steuerungsprogramm von einer Steuerungseinrichtung 22 antreibbar sind, wobei das Steuerungsprogramm derart eingerichtet ist, dass zum Einarbeiten von Hinterlegungen 6 in linke und rechte Zahnflanken 4, 5 der Zähne 3 eines verzahnten Werkrades 1 durch Wälzschälen in zwei aufeinander folgenden Bearbeitungsschritten jeweils durch eine differenziale und/oder tangentiale Vorschubkomponente in Linksdrehrichtung L, TL mit den linken Schneidkanten 14 der Schneidzähne 13 die linken Zahnflanken 4 und durch eine differenziale und/oder tangentiale Vorschubkomponente in Rechtsdrehrichtung R, TR mit den rechten Schneidkanten 15 der Schneidzähne 13 die rechten Zahnflanken 5 bearbeitet werden.

**Bezugszeichenliste:**

| | | | |
|---|---|---|---|
| 1 | Werkrad | L | Linksdrehrichtung |
| 2 | Drehachse, Werkstückspindelachse | R | Rechtsdrehrichtung |
| 3 | Zahn | RD | Radialrichtung |
| 4 | Zahnflanke | TL | linke Vorschubkomponente |
| 5 | Zahnflanke | TR | rechte Vorschubkomponente |
| 6 | Hinterlegung | V | Vorschub |
| 7 | Hinterlegungsflanke (rechts) | | |
| 8 | Hinterlegungsflanke (links) | | |
| 9 | Austrittsflanke | | |
| 10 | Übergang | α | Hinterlegungswinkel |
| 11 | Schneidrad | β | Austrittswinkel |
| 12 | Werkzeugspindelachse | γ | Kopffreiwinkel |
| 13 | Schneidzahn | ε | Flankenwinkel |
| 14 | Schneidkante | θ | Achskreuzwinkel |
| 15 | Schneidkante | | |
| 16 | linke Flanke | | |
| 17 | rechte Flanke | | |
| 18 | Werkzeugspindel | | |
| 19 | Werkstückspindel | | |
| 20 | Futter | | |
| 21 | Vorschubeinrichtung | | |
| 22 | Steuereinrichtung | | |

## Patentansprüche

1. Verfahren zum Einarbeiten von Hinterlegungen (6, 7) in linke und rechte Zahnflanken (4, 5) der Zähne (3) eines verzahnten Werkrades (1) durch Wälzschälen, bei dem das Werkrad (1) und ein in einem Achskreuzwinkel (θ) zum Werkrad (1) angeordnetes Schneidzähne (13) mit rechten und linken Schneidkanten (14, 15) aufweisendes Schneidrad (11) in einem festen Drehzahlverhältnis kontinuierlich drehangetrieben werden, die Schneidzähne (13) spanabtragend in die Zahnflanken (4, 5) eingreifen und der Vorschub zumindest eine Bewegungskomponente in Erstreckungsrichtung der Zähne (3) des Werkrades (1) besitzt, **dadurch gekennzeichnet, dass** in zwei aufeinander folgenden Bearbeitungsschritten jeweils durch eine differenziale und/oder tangentiale Vorschubkomponente in Links-drehrichtung (L, TL) mit den linken Schneidkanten (14) der Schneidzähne (13) die linken Zahnflanken (4) und durch eine differenziale und/oder tangentiale Vorschubkomponente in Rechtsdrehrichtung (R, TR) mit den rechten Schneidkanten (15) der Schneidzähne (13) die rechten Zahnflanken (5) bearbeitet werden.

2. Verfahren nach Anspruch 1, **dadurch gekennzeichnet, dass** der Vorschubbewegung in Erstreckungsrichtung der Zähne entweder lediglich eine differenziale Vorschubkomponente in Linksdrehrichtung (L) oder in Rechtsdrehrichtung (R) oder nur eine linke tangentiale Vorschubkomponente (TL) oder rechte tangentiale Vorschubkomponente (TR) überlagert ist.

3. Verfahren nach einem der vorhergehenden Ansprüche, **dadurch gekennzeichnet, dass** zur Korrektur von Verzerrungen im Flächenverlauf der Hinterlegungsflanken (7, 8) während des Vorschubs in Zahnflankenrichtung auch der Radialabstand des Kreuzungspunktes der Werkstückspindelachse (2) und der Werkzeugspindelachse (12) zur Werkstückspindelachse (2) und/oder der Achskreuzwinkel (θ) geändert wird.

4. Verfahren nach einem der vorhergehenden Ansprüche, **dadurch gekennzeichnet, dass** der Achskreuzwinkel (θ) im Bereich zwischen 8° und 25°, bevorzugt im Bereich zwischen 10° und 15° liegt.

5. Verfahren nach einem der vorhergehenden Ansprüche, **dadurch gekennzeichnet, dass** das Verhältnis der Schneidzähne (13) des Schneidrades (11) zu den Zähnen (3) des Werkrades (1) geringer ist als ein Halb, geringer ist als ein Drittel, geringer ist als ein Viertel oder etwa ein Fünftel beträgt.

6. Verfahren nach einem der vorhergehenden Ansprüche, **dadurch gekennzeichnet, dass** die Hinterlegungen (6, 7) in einem Hinterlegungswinkel (α) von 2,5° bis 17°, insbesondere von 4° bis 15° zur Zahnflanke (4, 5) zahneinwärts verlaufende Hinterlegungsflanken (8) aufweisen.

7. Verfahren nach einem der vorhergehenden Ansprüche, **dadurch gekennzeichnet, dass** der Flankenfreiwinkel (ε) der Schneidkanten (14, 15) mindestens 2° größer ist, als der Hinterlegungswinkel (α) und bevorzugt in einem Bereich zwischen 6 und 17° liegt.

8. Verfahren nach einem der vorhergehenden Ansprüche, **dadurch gekennzeichnet, dass** die Hinterlegungen (6) in einem Austrittswinkel (β) >15° zur Zahnflanke (4, 5) verlaufende Austrittsflanken (9) aufweisen.

9. Verfahren nach einem der vorhergehenden Ansprüche, **dadurch gekennzeichnet, dass** die Zähne (3) des Werkrades (1) schräg zur Achse (2) des Werkrades verlaufen.

10. Verfahren nach einem der vorhergehenden Ansprüche, **dadurch gekennzeichnet, dass** das Schneidrad (11) nach Erreichen einer maximalen Eindringtiefe in die Zahnflanke (4, 5) ohne Axialvorschub insbesondere in Radialrichtung aus der Verzahnung herausbewegt wird, so dass sich eine an einem Übergang (10) anschließende Austrittsflanke (9) ausbildet.

11. Werkzeugmaschine zur Durchführung eines Verfahrens gemäß einem oder mehreren der vorhergehenden Ansprüche mit einer Werkzeugspindel (18), die ein linke und rechte Schneidzähne (14, 15) aufweisendes Schneidrad (11) trägt, mit einer Werkstückspindel (19), die ein verzahntes, mit Hinterlegungen zu versehenes Werkrad (1) trägt und mit einer Vorschubeinrichtung (21) mindestens zur Relativverlagerung des Schneidrades (11) gegenüber dem Werkrad (1) in Achsrichtung (2) der Werkstückspindel (19), wobei die Werkzeugspindel (19), die Werkstückspindel (18) und die Vorschubeinrichtung (21) elektrische Einzelantriebe aufweisen, die nach einem Steuerungsprogramm von einer Steuerungseinrichtung (22) antreibbar sind, wobei das Steuerungsprogramm derart eingerichtet ist, dass zum Einarbeiten von Hinterlegungen (6) in linke und rechte Zahnflanken (4, 5) der Zähne (3) eines verzahnten Werkrades (1) durch Wälzschälen in zwei aufeinander folgenden Bearbeitungsschritten jeweils durch eine differenziale und/oder tangentiale Vorschubkomponente in Linksdrehrichtung (L, TL) mit den linken Schneidkanten (14) der Schneidzähne (13) die linken Zahnflanken (4) und durch eine differenziale und/oder tangentiale Vorschubkomponente in Rechtsdrehrichtung (R, TR) mit den rechten Schneidkanten (15) der Schneidzähne (13) die rechten Zahnflanken (5) bearbeitet werden.

## Claims

1. A method for incorporating undercuts (6, 7) in left and right tooth flanks (4, 5) of teeth (3) of a toothed gear blank (1) by hob peeling, wherein the gear blank (1) and a cutting wheel (11) having cutting teeth (13) with right and left cutting edges (14, 15) arranged at an axis intersection angle (θ) to the gear blank (1) are continuously rotationally driven at a fixed speed ratio, the cutting teeth (13) engage in the tooth flanks (4, 5) in a manner that removes shavings and the feed has at least one movement component in the direction of extension of the teeth (3) of the gear blank (1), **characterized in that** in two consecutive machining steps the left tooth flanks (4) are each machined by a differential and/or tangential feed component in the anticlockwise direction of rotation (L, TL) with the left cutting edges (14) of the cutting teeth (13) and the right tooth flanks (5) are machined by a differential and/or tangential feed component in the clockwise direction of rotation (R, TR) with the right cutting edges (15) of the cutting teeth (13).

2. The method according to claim 1, **characterized in that** either only a differential feed component in the anticlockwise direction of rotation (L) or in the clockwise direction of rotation (R) or only a left tangential feed component (TL) or right tangential feed component (TR) is superposed on the feed movement in the direction of extension of the teeth.

3. The method according to any one of the preceding claims, **characterized in that** for correction of distortions in the surface profile of the undercut flanks (7, 8) during feed in the tooth flank direction, the radial distance of the point of intersection of the workpiece spindle axis (2) and the tool spindle axis (12) with respect to the workpiece spindle axis (2) and/or the axis intersection angle (θ) is varied.

4. The method according to any one of the preceding claims, **characterized in that** the axis intersection angle (θ) is in the range between 8° and 25°, preferably in the range between 10° and 15°.

5. The method according to any one of the preceding claims, **characterized in that** the ratio of the cutting teeth (13) of the cutting wheel (11) to the teeth (3) of the gear blank (1) is less than a half, less than a third, less than a quarter or approximately one fifth.

6. The method according to any one of the preceding claims, **characterized in that** the undercuts (6, 7) in an undercut angle (α) of 2.5° to 17°, in particular of 4° to 15° to the tooth flank (4, 5) have undercut flanks (8) running tooth-inwards.

7. The method according to any one of the preceding claims, **characterized in that** the flank clearance angle (ε) of the cutting edges (14, 15) is at least 2° larger than the undercut angle (α) and preferably lies in a range between 6 and 17°.

8. The method according to any one of the preceding claims, **characterized in that** the undercuts (6) have exit flanks (9) running at an exit angle (β) > 15° to the tooth flank (4, 5).

9. The method according to any one of the preceding claims, **characterized in that** the teeth (3) of the gear blank (1) run helically to the axis (2) of the gear blank (1).

10. The method according to any one of the preceding claims, **characterized in that** after reaching a maximum depth of penetration in the tooth flank (4, 5) the cutting wheel (11) is moved out from the toothed structure without axial feed, in particular in the radial direction so that an exit flank (9) adjoining a transition (10) is formed.

11. A machine tool for carrying out a method according to one or more of the preceding claims having a tool spindle (18) which carries a cutting wheel (11) having left and right cutting teeth (14, 15), having a workpiece spindle (19) which carries a toothed gear blank (1) provided with undercuts and having a feed device (21) at least for relative displacement of the cutting wheel (11) with respect to the gear blank (1) in the axial direction (2) of the workpiece spindle (19), wherein the tool spindle (19), the workpiece spindle (18) and the feed device (21) have electrical individual drives which can be driven according to a control program by a control device (22), wherein the control program is adapted in such a manner that for incorporating undercuts (6) in left and right tooth flanks (4, 5) of the teeth (3) of a toothed gear blank (1) by hob peeling in two consecutive machining steps, the left tooth flanks (4) are each machined by a differential and/or tangential feed component in the anticlockwise direction of rotation (L, TL) with the left cutting edges (14) of the cutting teeth (13) and the right tooth flanks (5) are machined by a differential and/or tangential feed component in the clockwise direction of rotation (R, TR) with the right cutting edges (15) of the cutting teeth (13).

## Revendications

1. Procédé pour réaliser par taillage par développante des contre-dépouilles (6, 7) dans des flancs gauche et droit (4, 5) des dents (3) d'une roue à usiner (1) qui est dentée, dans lequel la roue à usiner (1) et une roue de coupe (11) agencée selon un angle de croisement d'axes (θ) par rapport à la roue à usiner (1) et présentant des arêtes de coupe droites et gauches (14, 15), sont entraînées en rotation en continu avec un rapport de vitesses fixe, les dents de coupe (13) engagent les flancs de dents (4, 5) en enlèvement de copeaux et l'avance présente au moins une composante de mouvement dans la direction d'extension des dents (3) de la roue à usiner (1), **caractérisé en ce que** sont usinés en deux étapes d'usinage successives les flancs de dent gauches (4) avec les arêtes de coupe gauches (14) des dents de coupe (13) à chaque fois au moyen d'une composante d'avance différentielle et/ou tangentielle dans le sens de rotation à gauche (L, TL) et les flancs de dent droits (5) avec les arêtes de coupe droites (15) des dents de coupe (13) à chaque fois au moyen d'une composante d'avance différentielle et/ou tangentielle dans le sens de rotation à droite (R, TR).

2. Procédé selon la revendication 1, **caractérisé en ce qu'**au mouvement d'avance dans la direction d'extension des dents est superposée soit seulement une composante d'avance différentielle dans le sens de rotation à gauche (L) ou dans le sens de rotation à droite (R), soit seulement une composante d'avance tangentielle à gauche (TL) ou une composante d'avance tangentielle à droite (TR).

3. Procédé selon l'une des revendications précédentes, **caractérisé en ce qu'**on modifie également la distance radiale du point d'intersection de l'axe de broche porte-pièce (2) et de l'axe de broche porte-outil (12) par rapport à l'axe de broche porte-pièce (2) et/ou l'angle de croisement d'axes (θ) lors de l'avance dans la direction des flancs de dent pour corriger des déformations de l'évolution de la surface des flancs de contre-dépouilles (7, 8).

4. Procédé selon l'une des revendications précédentes, **caractérisé en ce que** l'angle de croisement d'axes (θ) est compris entre 8° et 25°, de préférence entre 10° et 15°.

5. Procédé selon l'une des revendications précédentes, **caractérisé en ce que** le rapport entre les dents de coupe (13) de la roue de coupe (11) et les dents (3) de la roue à usiner (1) est inférieur à un demi, inférieur à un tiers, inférieur à un quart ou est d'environ un cinquième.

6. Procédé selon l'une des revendications précédentes, **caractérisé en ce que** les contre-dépouilles (6, 7) présentent des flancs de contre-dépouille (8) s'étendant vers l'intérieur du flanc de dent (4, 5) selon un angle de contre-dépouille (α) de 2,5° à 17°, en particulier de 4° à 15°.

7. Procédé selon l'une des revendications précédentes, **caractérisé en ce que** l'angle de dépouille (ε) des arêtes de coupe (14, 15) est supérieur d'au moins 2° à l'angle de contre-dépouille (α) et se situe de préférence dans une plage comprise entre 6 et 17°.

8. Procédé selon l'une des revendications précédentes, **caractérisé en ce que** les contre-dépouilles (6) présentent des flancs de sortie (9) s'étendant selon un angle de sortie (β) >15° par rapport au flanc de dent (4, 5) .

9. Procédé selon l'une des revendications précédentes, **caractérisé en ce que** les dents (3) de la roue à usiner (1) s'étendent obliquement par rapport à l'axe (2) de la roue à usiner.

10. Procédé selon l'une des revendications précédentes, **caractérisé en ce que**, après avoir atteint une profondeur de pénétration maximale dans le flanc de dent (4, 5), la roue de coupe (11) est déplacée en particulier dans la direction radiale sans avance axiale hors de la denture de manière que se forme un flanc de sortie (9) qui se raccorde à une transition (10).

11. Machine-outil pour la mise en œuvre d'un procédé selon une ou plusieurs des revendications précédentes, avec une broche porte-outil (18) qui porte une roue de coupe (11) avec des dents de coupe gauches et droites (14, 15), avec une broche porte-pièce (19) qui porte une roue à usiner (1) dentée à pourvoir de contre-dépouilles et avec un dispositif d'avance (21) au moins pour le déplacement relatif de la roue de coupe (11) par rapport à la roue à usiner (1) dans la direction axiale (2) de la broche porte-pièce (19), dans laquelle la broche porte-outil (19), la broche porte-pièce (18) et le dispositif d'avance (21) présentent des entraînements électriques individuels qui peuvent être commandés par un dispositif de commande (22) selon un programme de commande, dans laquelle le programme de commande est établi de telle manière que pour réaliser des contre-dépouilles (6) par taillage par développante dans des flancs de dent gauche et droit (4, 5) des dents (3) d'une roue à usiner (1) dentée, sont usinés en deux étapes d'usinage successives les flancs de dent gauches (4) avec les arêtes de coupe gauches (14) des dents de coupe (13) à chaque fois au moyen d'une composante d'avance différentielle et/ou tangentielle dans le sens de rotation à gauche (L, TL) et les flancs de dent droits (5) avec les arêtes de coupe droites (15) des dents de coupe (13) à chaque fois au moyen d'une composante d'avance différentielle et/ou tangentielle dans le sens de rotation à droite (R, TR).
